# EUROPEAN PATENT SPECIFICATION

(11) **EP 3 404 887 B1**
(45) Date of publication and mention of the grant of the patent: **28.12.2022**
(21) Application number: 17171372.0
(22) Date of filing: 16.05.2017
(51) Int. Cl.: H04L 9/40, G06F 21/60

(54) **ALTERED-REALITY RIGHTS SETTING**
EINSTELLUNG DER RECHTE VON VERÄNDERTER REALITÄT
RÉGLAGE DE DROITS DE RÉALITÉ ALTÉRÉE

(43) Date of publication of application: 21.11.2018
(73) Proprietor: Nokia Technologies Oy, 02610 Espoo (FI)
(72) Inventor: TYTGAT, Donny, 2018 Antwerpen (BE); LIEVENS, Sammy, 2018 Antwerpen (BE); STEVENS, Christoph, 2018 Antwerpen (BE)
(74) Representative: Novagraaf Technologies

(56) References cited:
- US-A1- 2013 174 213
- US-A1- 2014 045 524
- US-A1- 2014 108 528

## Description

### FIELD OF INVENTION

The present invention relates to altered-reality (including virtual reality and augmented reality) applications. Particular embodiments relate to a method, a system, and a computer program product for setting rights in an altered-reality environment.

### BACKGROUND

Typically, in altered-reality (AR) applications, reality is altered by adding virtual content. When engaging in interaction with other users, or even other AR-enabling systems, issues can occur with respect to privacy rights for example, with respect to personal integrity, etc. One needs to have control about how other users see you through their AR experience.

Many solutions exist outside of the AR space to manage user rights of an application. Facebook for example has rights management with the notion of groups, and when adding information you can indicate to which group/individual users the information should be shared with. Similar systems are in place for Google Hangouts for instance. However AR specific solutions are not known at the time of the present invention, even though AR does have its specifics that need to be taken care off. AR has the potential of being much more intrusive for example by influencing what users see in a direct manner. The explicit nature of setting specific rights data for specific parts of shared information does not fit well with the AR paradigm as AR aims at removing the man-machine interface while enabling more ubiquitous use of meta-information in everyday life. Hence there is a need for a more automated and transparent solution for setting rights in an AR environment.

US 2013/0174213 discloses a system for automatically sharing virtual objects between different mixed reality environments. A see-through head-mounted display device (HMD) automatically determines a privacy setting associated with another HMD by inferring a particular social relationship with a person associated with the other HMD. Subsequently, the HMD may transmit to the other HMD, or receive from the other HMD, virtual objects, taking the associated privacy setting into account.

US 2014/0108528 discloses a method for receiving first information about a proximity of a first user, identifying a second user within the proximity of the first user based at least in part of the first information, retrieving second information about the second user from a graph of a socialnetworking system, and sending the second information about the second user to the first user.

US 2014/0045524 discloses systems and methods for controlling accuracy of transmitted information. A package is assembled based on a numerical value and policies associated with the sender. A second value of reduced accuracy with respect to the first value is yielded when the package is unpacked by a receiver. The accuracy reduction depends on policies associated with the receiver and/or the sender.

### SUMMARY

### The invention is set out in the independent claims.

The object of embodiments of the invention is to provide a more user-friendly method for setting rights in an altered-reality (AR) environment. More in particular, embodiments of the invention aim to provide a more automated and implicit method of managing rights when interacting with other AR systems and/or users which allow for a less intrusive experience of the AR space.

According to a first aspect of the invention there is provided a method for setting rights in an AR environment. The method comprises the following steps:
- routinely detecting by a first AR-enabling system of a first user the presence of a second user associated with a second AR-enabling system, within a physical environment of the first user;
- receiving by a rights management system data featuring the second user when the second user is detected by the first AR-enabling system, said rights management system configured for managing rights data respective at least to the first user and to the second user, said rights data indicating authorizations or denials set for the first user with respect to the second user and vice versa;
- based on the received data featuring the second user, obtaining by the rights management system the rights data of the first user with respect to the second user;
- based on the obtained rights data of the first user with respect to the second user, setting the rights data of the second user with respect to the first user by the rights management system.

Embodiments of the invention are based *inter alia* on the insight that when a first AR-enabling system of a first user detects a second user of a second AR-enabling system, setting the rights data of the second user with respect to the first user in an explicit way, such as an authorization prompt for example, might decrease the experience of the AR environment. To overcome this problem, use is made of a routine detection of a second user as a trigger to an automated setting of rights data. In that manner, the man-machine interface can be removed. The management of the rights data occurs in a rights management system. After the detection of the second user, the first AR-enabling system will automatically contact the rights management system and transmit data featuring the second user. Based on the received data featuring the second user, the rights management system will be able to identify the second user and obtain the rights data of the first user with respect to the second user associated to it. These obtained rights data will be used to derive and set the rights data of the second user with respect to the first user. Since all data pertaining to users are internally managed by the rights management system, confidentiality can be maintained. And since setting the rights data, that is to say the authorizations and denials of one user with respect to another user, is triggered by a routine detection, the rights data are managed in a more automated and implicit manner.

According to a preferred embodiment, the setting of the rights data of the second user with respect to the first user comprises at least one of the following:
- setting full reciprocity of the rights data where the rights data granted to the second user by the first user are the exact same rights data granted to the first user by the second user;
- setting partial reciprocity of the rights data where the rights data granted to the second user by the first user are a subset of the rights data granted to the first user by the second user;
- no setting of rights data if no rights data are set for the second user with respect to the first user.

In this manner, a control over the rights data between at least two users is built on a trust relation. Based on the trust between the first and the second user, various degrees of reciprocity of the rights data can be chosen. These degrees of reciprocity range from no setting of rights data, in the case of a complete lack of trust, to full reciprocity of the rights data, in the case of complete trust. To mitigate these two extreme degrees of reciprocity, additional rights or constraints can be added resulting in a partial reciprocity. Thus, a reciprocal setting of rights data will allow to increase the experience of AR environment between users trusting each other.

According to an exemplary embodiment, the method further comprises:
- based on the set rights data of the second user with respect to the first user, determining action rights of the first AR-enabling system by the first AR-enabling system, said action rights being permitted or required actions.

In this way, the first AR-enabling system may use the rights data set by the rights management system to derive its permitted or required actions.

According to a preferred embodiment, the setting of the rights data of the second user with respect to the first user is further based on preconfigured policies comprising at least one of the following aspects: a context, a group affiliation of the second user, a reciprocity condition of the obtained rights data, and an environment of the first user.

In that manner, preconfigured policies may be taken into account when determining the rights data, e.g. depending on the environment the setting may be a full reciprocity setting or a partial reciprocity setting.

According to an exemplary embodiment, the method further comprises:
- determining a compatibility level between the obtained rights data of the first user with respect to the second user and the set rights data of the second user with respect to the first user;
- incurring a warning action featuring a virtual emphasis of the second user presence within the environment of the first user if the compatibility level is below a predetermined level of compatibility between the first and the second users.

In this way, the users associated to AR-enabling systems not respecting the rights data of the first user are signalled by a virtual emphasis of their presence. The no-respect of the rights data is defined based on a compatibility level between the rights data of each user. Below a certain level, the concerned users are made more apparent to inform the first user in a clear manner for an AR environment.

According to a preferred embodiment, the routine detection comprises:
- capturing images of the physical environment of the first user;
and the data featuring the second user is based on the captured images associated with the second user.

In this manner, a simple AR-enabling system including an image-capturing device for the detection of the second user within the physical environment of the first user may be used.

The skilled person will understand that the hereinabove described technical considerations and advantages for method embodiments also apply to the below described corresponding system embodiments, *mutatis mutandis.*

According to an exemplary embodiment, there is provided a rights setting system. The rights setting system comprises:
- at least one user detection unit of a first AR-enabling system of a first user configured for routinely detecting a presence of a second user of a second AR-enabling system user within a physical environment of the first user;
- a rights management system configured for:
   - receiving data featuring the second user when the second user is detected by the first AR-enabling system;
   - managing rights data respective at least to the first user and to the second user, said rights data indicating authorizations or denials set for the first user with respect to the second user and vice versa;
   - obtaining the rights data of the first user with respect to the second user based on the received data featuring the second user;
   - setting the rights data of the second user with respect to the first user based on the obtained rights data of the first user with respect to the second user.

According to a preferred embodiment, the first AR-enabling system further comprises:
- an action rights module configured for determining action rights of the first AR-enabling system by the first AR-enabling system, said action rights being permitted or required actions.

According to an exemplary embodiment, the rights management system is configured for setting the rights data of the second user with respect to the first user further based on preconfigured policies comprising at least one of the following aspects: a context, a group affiliation of the second user, a reciprocity condition of the obtained rights data, an environment of the first user.

According to a preferred embodiment, the rights setting system further comprises:
- at least one environment sensor unit configured for obtaining data pertaining to a physical environment where the first user of the AR application is located;
and the rights management system is configured for setting the preconfigured policies based on the data obtained by the at least one environment sensor unit.

According to an exemplary embodiment, the rights management system is further configured for:
- determining a compatibility level between the obtained rights data of the first user with respect to the second user and the set rights data of the second user with respect to the first user;
- incurring a virtual emphasis of the second user presence within the environment of the first user below a predetermined level of compatibility between the first and the second users.

According to an preferred embodiment, the at least one user detection unit comprises an image-capturing device;
and the rights management system is further configured for receiving data based on the captured images of the second user.

It is to be noted that the at least one user detection unit may be a detection unit carried by the first user or a detection unit at a distance of the first user.

According to another aspect, there is provided a rights setting system. The rights management system is configured for:
- receiving data featuring a second user based on image data of the second user when the second user is detected by a first AR-enabling system associated with a first user;
- managing rights data respective at least to the first user and to the second user, said rights data indicating authorizations or denials set for the first user with respect to the second user and vice versa;
- obtaining the rights data of the first user with respect to the second user based on the received data featuring the second user;
- setting the rights data of the second user with respect to the first user based on the obtained rights data of the first user with respect to the second user.

According to a further aspect of the invention, there is provided a computer program comprising computer-executable instructions to perform the method, when the program is run on a computer, according to any one of the steps of any one of the embodiments disclosed above.

It will be understood by the skilled person that the features and advantages disclosed hereinabove with respect to embodiments of the method may also apply, *mutatis mutandis,* to embodiments of the computer program product.

According to a further aspect of the invention, there is provided a computer device or other hardware device programmed to perform one or more steps of any one of the embodiments of the method disclosed above.

According to another aspect there is provided a data storage device encoding a program in machine-readable and machine-executable form to perform one or more steps of any one of the embodiments of the method disclosed above.

It will be understood by the skilled person that the features and advantages disclosed hereinabove with respect to embodiments of the method may also apply, *mutatis mutandis,* to embodiments of the digital storage medium.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

### BRIEF DESCRIPTION OF THE FIGURES

This and other aspects of the present invention will now be described in more detail, with reference to the appended drawings showing a currently preferred embodiment of the invention. Like numbers refer to like features throughout the drawings.
Figure 1 illustrates schematically an exemplary embodiment of a rights setting system according to the invention;
Figure 2 illustrates schematically an exemplary embodiment of a method for setting rights according to the invention;
Figure 3 is a flow chart illustrating a further exemplary embodiment of a method for setting rights according to the invention;
Figure 4 is a flow chart illustrating a further exemplary embodiment of a method for setting rights according to the invention;
Figure 5 illustrates schematically a further exemplary embodiment of a rights setting system according to the invention.

### DESCRIPTION OF EMBODIMENTS

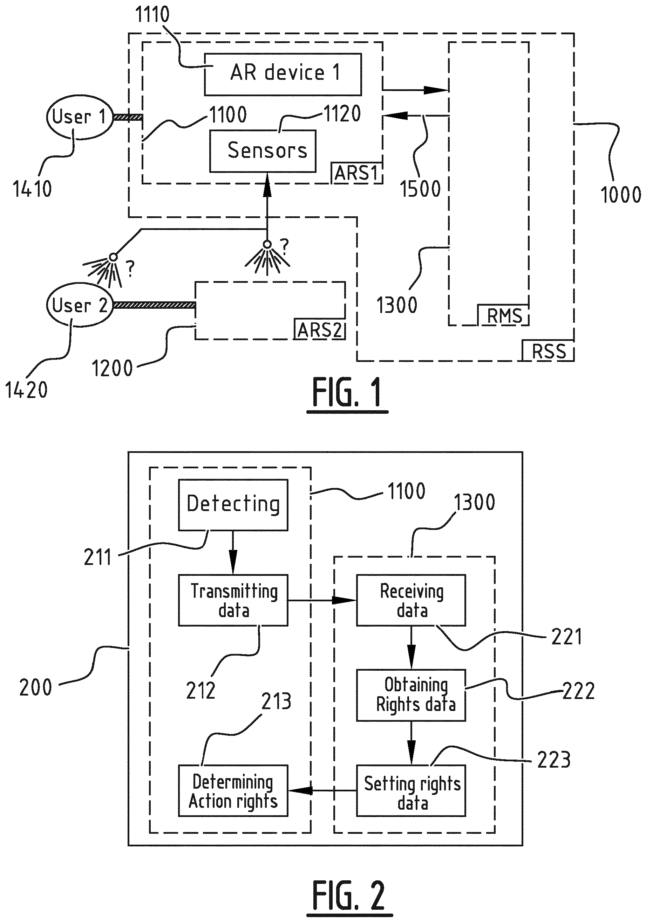

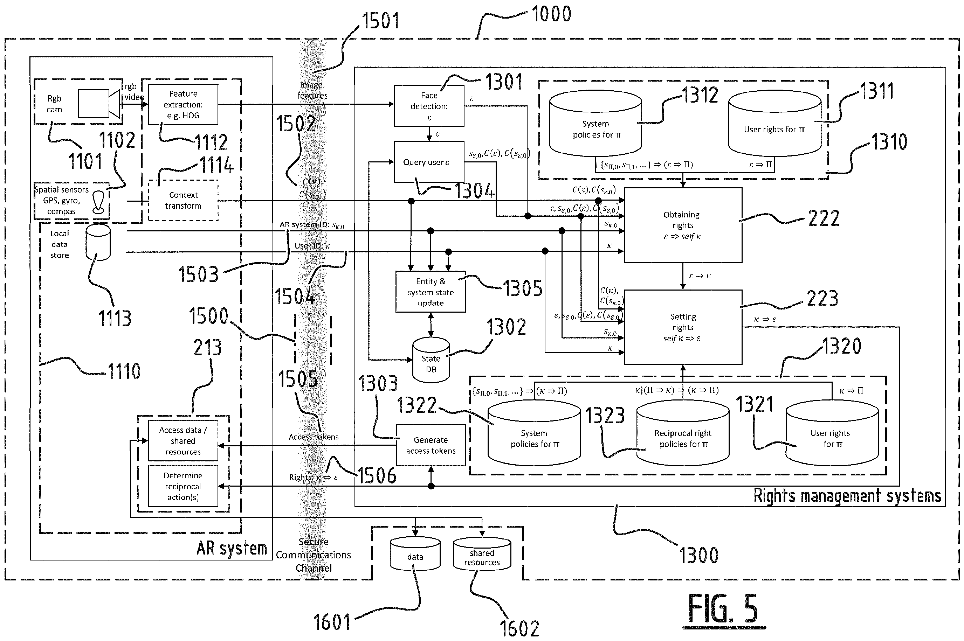

Figures 1 to 4 illustrate the embodiments of the basic principles of a method and system for setting rights according to the present invention. Figure 5 illustrates schematically a more detailed exemplary embodiment of the embodiments shown in Figures 1 to 4. Like numbers utilized in Figures 1 to 5 refer to like features throughout the drawings.

Figure 1 illustrates schematically an embodiment of a rights setting system and method according to the present invention. The rights setting system 1000 comprises at least a first AR-enabling system 1100 of a first user 1410 and a second AR-enabling system 1200 of a second user 1420, and a rights management system 1300. In Figure 5, the first user 1410 is referred as κ and the second user 1420 is referred as ε; while the identity of the first AR-enabling system 1100 of the first user is denoted as *S* _{κ, 0}, and the identity of the second AR-enabling system 1200 of the second user is denoted as *S* _{ε, 0}. A first step involves the detection by the first AR-enabling system 1100 of the second user 1420 and/or the second AR-enabling system 1200 the second user is using. This detection is performed by at least one detection unit 1120 linked to a first AR device 1110 of the first AR-enabling system 1100. An example of the detection may be the use of a RGB camera 1101 mounted on the first AR device 1110 worn by the first user, see the detailed embodiment of Figure 5. In another example, the second user 1420 detection may be provided by sensors 1120 of an end-user device such as a gaming console, a desktop computing device, a laptop computing device, a tablet computing device, or a mobile handheld computing device. This end-user device, incorporated in the first AR-enabling system 1100, may thus be a computing device on which the method of the present invention is being implemented, equipped with suitable sensors.

Note the distinct split between a user, and the AR-enabling systems. The user, typically a person, is the subject that uses AR for augmenting his/her real-world experience. The means of creating such an experience is done by the AR-enabling systems, such as 1100 or 1200. In most cases only one AR-enabling system per user will be used, however it cannot be excluded that a single user uses multiple AR systems to create a more complete AR experience. The detection of the second user by the detection unit 1120 may be split between user detection and AR-enabling system detection. By detecting the second AR-enabling system 1200, the second user 1420 may also be detected since the identity of a user 1504 associated with an identified AR-enabling system 1503 will be accessible as a configuration parameter, e.g. by retrieving this configuration parameter from a local data store 1113, see the detailed embodiment of Figure 5. The second user 1420 might have logged in on his/her AR device with his/her user account.

In another example, the detection unit 1120 is an image-capturing device and HOG-based (Histogram of Oriented Gradients) face detection may be used on the images captured by the image-capturing device, e.g. a RGB camera 1101 mounted on the AR device 1110. In order to limit the amount of data that is sent over a communication channel 1500 between the first AR-enabling system 1100 and a rights management system 1300, the HOG feature extraction 1112 may be preprocessed on the first AR device 1110 itself so that only the extracted features 1501 may be sent to the rights management system 1300, see the detailed embodiment of Figure 5. As such the second user identity may be determined 1304 at the rights management system 1300, see the detailed embodiment of Figure 5. This also prevents confidential information such as the face feature database 1301 to be present on the first AR-enabling system 1100, see the detailed embodiment of Figure 5.

Typically, the rights management system 1300 keeps track of the associated pair user/AR-enabling system(s) in a state database 1302, see the detailed embodiment of Figure 5. One can thus determine the second AR-enabling system 1200 of the second user 1420 by querying 1304 this information from the state database 1302. In another example, one could have an identification marker, e.g. RFID tag, built into an AR device 1110 and immediately giving the identities of both the user 1503 and the AR-device 1504 associated to the user.

Figure 2 illustrates schematically an embodiment of a method and system for setting rights according to the present invention. A routine detection 211 by a first AR-enabling system 1100 to detect a second user 1420 of a second AR-enabling system 1200 is done. Detecting 211 the second user 1420 may be done via various means. Typically, an AR-enabling system 1100, 1200 has a number of sensors 1120 that detect a physical environment in which a first user 1410 of the first AR-enabling system 1100 is located. The sensors 1120 may also be used to detect certain objects within this physical environment. Context detection can also happen to add additional parameters to the obtaining 222 and setting 223 of rights data. Some possible detection units 1101 and 1102 might include primary context elements such as an environment and a time of day, see the detailed embodiment of Figure 5. But also more advanced context elements may be determined such as the activity of the first and second users 1410, 1420, the upcoming schedule, or even detected mood. Not only users 1410, 1420 have context 1502 associated to them, but also the AR-enabling systems 1100, 1200, see the detailed embodiment of Figure 5. In Figure 5, the context data associated to the first user is referred as *C*(κ) and the context data associated to the first AR-enabling system is referred as *C*(*S* _{κ, 0}). Context data 1502, and identities of the first AR-enabling system 1503 and of the first user 1504 are updated 1305 to a database of the rights management system 1302, see the detailed embodiment of Figure 5. An AR-enabling system might have multiple runtime modes, e.g. low-power where a number of features are disabled, that could influence obtaining 222 and setting 223 the rights data. Relevant data is being transmitted 212 from the AR-enabling system 1100 and being received 221 by the rights management system 1300.

When the second user 1200 is known, rights data of the first user 1410 with respect to the second user 1420 are obtained 222. The rights data of the first user with respect to the second user are used as input for setting 223 the rights data of the second user with respect to the first user. This may allow for implicit rights data to be defined as compared to applications where the rights data need to be explicitly specified. It has the advantage to make it more appropriate for an AR experience where many users of AR-enabling systems may be met throughout the day; one cannot expect to have explicit rules for each of them.

As mentioned, a step is about obtaining 222 the rights data of the first user with respect to the second user. These rights data may be obtained based on the identity of the first user 1410 and the preconfigured policies configured towards other users 1311, see the detailed embodiment of Figure 5. In Figure 5, certain preconfigured policies may be configured depending on certain user groups, where a user group is noted as Π. These preconfigured poficies1311 might explicitly include the first user 1410, but will more often include users that are higher on the hierarchical level. In Figure 5, preconfigured policies defined by the second user for a user group is noted as ε=>Π, and preconfigured policies defined by the first user for a user group is noted as κ=>Π. Typically, the preconfigured policies 1310, 1320 are not necessarily split in static sets, but may be dynamic sets based on learned knowledge, explicit gestures, parental control, etc. An additional input is related to the detected AR-enabling system(s) 1100, 1200. One could impose additional system preconfigured policies 1312, 1322 based on the detected AR-enabling systems 1100, 1200, see the detailed embodiment of Figure 5. In Figure 5, the preconfigured policies defined based on a list of AR-enabling systems of users belonging to a user group are referred as {*S* _{Π, 0}, *S* _{Π,1}, ...} =>(ε => Π) when they concern the first user, and {*S* _{Π, 0}, *S* _{Π,1}. ... }=>(κ => Π) when they concern the second user. For instance, if an AR-enabling system is not able to determine certain action rights 213, said action rights being permitted or required actions, one may deny the same action rights in a reciprocal manner based on reciprocal preconfigured policies 1323, see the detailed embodiment of Figure 5. In Figure 5, the preconfigured policies defined based on reciprocity of the rights data granted to the second user are referred as κ|(Π=>κ)=>(κ=>Π). Certain AR-enabling systems might support determining certain action rights 213, while they might not support determining all action rights.

In another example, obtaining 222 and setting 223 rights data take into account user groups and set hierarchies. For instance, if no preconfigured policies 1311, 1321 exist for a certain user, one can look upward for matching groups in order to get policies that relate to this certain user. Typically, some of the obtained rights data of the first user with respect to the second user might be conditional. One might only want to give rights data when the other user also gives certain rights data based on reciprocal policies 1323; or when the other user also resides in a certain context.

In order to set 223 the rights data of the second user 1420 with respect to the first user 1410, a number of aspects may be taken into account. As mentioned, one of the inputs is the obtained 222 rights data of the first user with respect to the second user. The obtained rights data may be combined with the preconfigured policies 1320 that the first user 1410 has established. Using such preconfigured policies, one can allow for rights data to be set 223 based on the obtained rights data. Typically, reciprocal policies 1323 would potentially be open to much abuse, so additional constraining policies might be added.

When the rights data are finally set 223, one can determine action rights 213 in the first AR-enabling system 1100. As mentioned before, the action rights are both permitted and required actions. A permitted action might be permitting access to a certain resource of data, such action requiring a generated 1303 access token 1505 from the set rights data 1506, see the detailed embodiment of Figure 5.

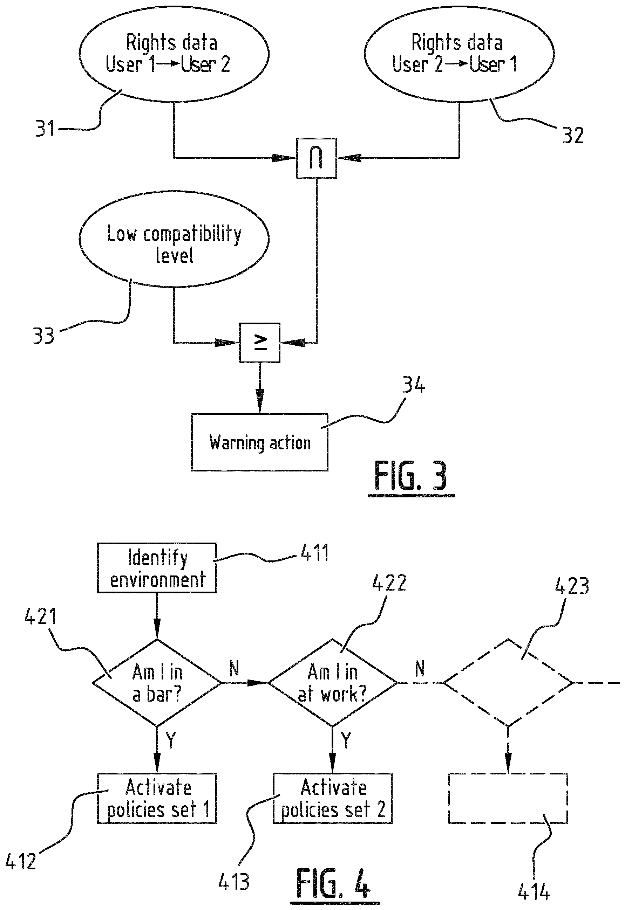

Figure 3 is a flow chart illustrating a further exemplary embodiment of a method and a system for setting rights according to the present invention. When the second user 1420 is using the second AR-enabling system 1200 to access a certain shared resource 1602 or data 1601 which has been entrusted to the first AR-enabling system 1100 according to the present invention, the access may only be authorized if the first 1100 and second 1200 AR-enabling systems have a certain level of compatibility, see the detailed embodiment of Figure 5. When the rights data 31 of the first user with respect to the second user have been obtained and the rights data 32 of the second user with respect to the first user have been set, they are being compared to determine a compatibility level between them. If this compatibility level is below a certain compatibility level 33, a warning action 34 may be linked to this fact in order to alert the first user 1410. As such, the rights data 31 of the first user with respect to the second user can impose a warning indicator, e.g. by virtually emphasizing the presence of the second user 1420 within the first user 1410 physical environment whose second AR-enabling system 1200 does not respect his/her rights data. Such indicator may range from a subtle icon that accompanies the second user 1420, up to a complete blocking of his visual properties. Additional action rights may be determined 213 based on a predetermined compatibility level such as: restricting access to a data resource, blocking communication between incompatible AR-enabling systems, etc.

Figure 4 is a flow chart illustrating a further exemplary embodiment of a method and a system for setting rights according to the present invention. In this exemplary embodiment, the context of the first user is limited to the environment in which the first user 1410 is located. The environment is identified 411 from a built-in GPS sensor 1102 of the first AR-enabling system 1100. Typically, the nature of this environment may depend on the information acquired by the sensors 1120; these could be absolute world coordinates (e.g. longitude and latitude), but also a more semantic interpretation such as: at a bar, at work, etc. A context transform 1114 takes place for the context to be altered to match the rights setting system 1300 input parameters, see the detailed embodiment of Figure 5. In this embodiment, the preconfigured policies regarding reciprocity 1323 may be made conditional based on the detected environment. By doing so, a match will be made between a typical social context of an environment and the preconfigured policies 1320 that are applied to sharing information with other users. This is based on the observation that one might be more susceptible to social interactions and the reciprocal sharing of personal information when the detected environment typically encourages such scenarios.

Typically, by default, one can assume that the first user 1410 has disabled reciprocal sharing 1323 of information to "strangers", so people that do not match more specific groups 1321 will not get personal information even if they are sharing these themselves. When being located in a certain environment however, preconfigured policies are set to override this default behaviour. When the first user 1410 enters a bar for instance, the environment detection may detect this area as a bar 421 where social interactions are taking place and some conditional reciprocal preconfigured policies 1323 are activated 412 to share limited personal information such as the name and the relationship status when the second user 1420 does so as well. When the first user enters its office for example, a work place may be detected 422 and other preconfigured policies are activated 413 to allow automatically the reciprocal sharing of the agenda or share blog entries of professional work items.

## Claims

1. A method for setting rights in an altered-reality (AR) environment, the method comprising the following steps:
- receiving (221) by a rights management system (1300) data featuring a second user (1420) associated with a second AR-enabling system (1200) when the second user (1420) is routinely detected by a first AR-enabling system (1100) of a first user (1410) within a physical environment of the first user, said rights management system (1300) configured for managing rights data respective at least to the first user (1410) and to the second user (1420), said rights data indicating authorizations or denials set for the first user (1410) with respect to the second user (1420) and vice versa;
- based on the received data featuring the second user (1420), obtaining (222) by the rights management system (1300) the rights data of the first user (1410) with respect to the second user (1420);
**characterized in that** the method further comprises:
- based on the obtained rights data of the first user (1410) with respect to the second user (1420), setting (223) the rights data of the second user (1420) with respect to the first user (1410) by the rights management system (1300);
- determining by the rights management system (1300) a compatibility level between the obtained rights data (31) of the first user (1410) with respect to the second user (1420) and the set rights data (32) of the second user (1420) with respect to the first user (1410);
- incurring by the rights management system (1300) a warning action (34) featuring a virtual emphasis of the second user's (1420) presence within the environment of the first user (1410) if the compatibility level is below a predetermined level of compatibility (33) between the first (1410) and the second (1420) users.

2. The method of claim 1, further comprising:
- based on the set rights data of the second user (1420) with respect to the first user (1410), determining action rights (213) of the first AR-enabling system (1100) by the first AR-enabling system (1100), said action rights being permitted or required actions.

3. The method of claim 1 or 2, wherein the setting (223) of the rights data of the second user (1420) with respect to the first user (1410) comprises at least one of the following:
- setting by the rights management system (1300) full reciprocity of the rights data where the rights data (32) granted to the second user (1420) by the first user (1410) are the exact same rights data (31) granted to the first user (1410) by the second user (1420);
- setting by the rights management system (1300) partial reciprocity of the rights data where the rights data (32) granted to the second user (1420) by the first user (1410) are a subset of the rights data (31) granted to the first user (1410) by the second user (1420);
- no setting of rights data if no rights data (32) are set for the second user (1420) with respect to the first user (1410).

4. The method of any one of the previous claims, wherein the setting (223) of the rights data of the second user (1420) with respect to the first user (1410) is further based on preconfigured policies (1320) comprising at least one of the following aspects: a context (1502), a group affiliation of the second user (1322), a reciprocity condition (1323) of the obtained rights data, an environment of the first user.

5. The method of claim 4, comprising:
- obtaining by the rights management system (1300) sensor data pertaining to a physical environment where the first user (1410) is located;
- based on the obtained sensor data of the physical environment, setting by the rights management system (1300) the preconfigured policies (1310, 1320).

6. A rights management system (1300) **characterized in that** the system is configured for:
- receiving (221) data featuring a second user (1420) based on image data of the second user (1420) when the second user is detected (211) by a first AR-enabling system (1100) associated with a first user (1410);
- managing rights data respective at least to the first user (1410) and to the second user (1420), said rights data indicating authorizations or denials set for the first user (1410) with respect to the second user (1420) and vice versa;
- obtaining (222) the rights data of the first user (1410) with respect to the second user (1420) based on the received data featuring the second user (1420);
- setting (223) the rights data of the second user (1420) with respect to the first user (1410) based on the obtained rights data of the first user (1410) with respect to the second user (1420);
- determining a compatibility level between the obtained rights data (31) of the first user (1410) with respect to the second user (1420) and the set rights data (32) of the second user (1420) with respect to the first user (1410);
- incurring a warning action (34) featuring a virtual emphasis of the second user's (1420) presence within the environment of the first user (1410) if the compatibility level is below a predetermined level of compatibility (33) between the first (1410) and the second (1420) users.

7. A rights setting system (1000) comprising:
- at least one user detection unit (1120) of the first AR-enabling system (1100) of a first user (1410) configured for routinely detecting (211) a presence of a second user (1420) of a second AR-enabling system (1200) within a physical environment of the first user (1410);
- a rights management system (1300) according to claim 6.

8. The rights setting system (1000) of claim 7, the first AR-enabling system (1100) further comprising:
- an action rights module configured for determining action rights (213) of the first AR-enabling system (1100) by the first AR-enabling system (1100), said action rights being permitted or required actions.

9. The rights setting system (1000) of claim 7 or 8, wherein the rights management system (1300) is configured for setting (223) the rights data of the second user (1420) with respect to the first user (1410) further based on preconfigured policies (1320) comprising at least one of the following aspects: a context (1502), a group affiliation of the second user (1322), a reciprocity condition (1323) of the obtained rights data, an environment of the first user.

10. The rights setting system (1000) according to claim 9, wherein the rights setting system (1000) further comprises:
- at least one environment sensor unit (1101,1102) configured for obtaining data pertaining to a physical environment where the first user (1410) of the AR application is located;
and wherein the rights management system (1300) is configured for setting the preconfigured policies (1310) based on the data obtained by the at least one environment sensor unit.

11. A computer program product comprising computer-executable program instructions for performing, when executed on a computer, the methods of any one of claims 1 to 5.

## Patentansprüche

1. Verfahren zum Einstellen von Rechten in einer Umgebung der veränderten Realität (AR), wobei das Verfahren die folgenden Schritte umfasst:
- Empfangen (221) von Daten über einen zweiten Benutzer (1420), der mit einem zweiten AR-Aktivierungssystem (1200) verknüpft ist, durch ein Rechtsverwaltungssystem (1300), wenn der zweite Benutzer (1420) routinemäßig von einem ersten AR-Aktivierungssystem (1100) eines ersten Benutzers (1410) in einer physischen Umgebung des ersten Benutzers routinemäßig detektiert wird, wobei das Rechtsverwaltungssystem (1300) dazu ausgelegt ist, Rechtsdaten, die mindestens den ersten Benutzer (1410) und den zweiten Benutzer (1420) betreffen, zu verwalten, wobei die Rechtsdaten Autorisierungen oder Zurückweisungen anzeigen, die für den ersten Benutzer (1410) mit Bezug auf den zweiten Benutzer (1420) eingestellt sind, und umgekehrt;
- Erhalten (222) der Rechtsdaten des ersten Benutzers (1410) mit Bezug auf den zweiten Benutzer (1420) durch das Rechtsverwaltungssystem (1300) auf Basis der empfangenen Daten über den zweiten Benutzer (1420);
**dadurch gekennzeichnet, dass** das Verfahren ferner Folgendes umfasst:
- Einstellen (223) der Rechtsdaten des zweiten Benutzers (1420) mit Bezug auf den ersten Benutzer (1410) durch das Rechtsverwaltungssystem (1300) auf Basis der erhaltenen Rechtsdaten des ersten Benutzers (1410) mit Bezug auf den zweiten Benutzer (1420);
- Bestimmen eines Kompatibilitätsmaßes zwischen den erhaltenen Rechtsdaten (31) des ersten Benutzers (1410) mit Bezug auf den zweiten Benutzer (1420) und den eingestellten Rechtsdaten (32) des zweiten Benutzers (1420) mit Bezug auf den ersten Benutzer (1410) durch das Rechtsverwaltungssystem (1300);
- Auslösen einer Warnaktion (34) mit einem virtuellen Schwerpunkt auf der Anwesenheit des zweiten Benutzers (1420) in der Umgebung des ersten Benutzers (1410) durch das Rechtsverwaltungssystem (1300), wenn das Kompatibilitätsmaß unter einem vorbestimmten Maß der Kompatibilität (33) zwischen dem ersten (1410) und dem zweiten (1420) Benutzer liegt.

2. Verfahren nach Anspruch 1, das ferner Folgendes umfasst:
- Bestimmen von Aktionsrechten (213) des ersten AR-Aktivierungssystems (1100) durch das erste AR-Aktivierungssystem (1100) auf Basis der eingestellten Rechtsdaten des zweiten Benutzers (1420) mit Bezug auf den ersten Benutzer (1410), wobei die Aktionsrechte zulässige oder erforderliche Aktionen sind.

3. Verfahren nach Anspruch 1 oder 2, wobei das Einstellen (223) der Rechtsdaten des zweiten Benutzers (1420) mit Bezug auf den ersten Benutzer (1410) mindestens eines von Folgendem umfasst:
- Einstellen einer vollständigen Wechselseitigkeit der Rechtsdaten durch das Rechtsverwaltungssystem (1300), wo die Rechtsdaten (32), die dem zweiten Benutzer (1420) vom ersten Benutzer (1410) gewährt werden, genau dieselben Rechtsdaten (31) sind, die dem ersten Benutzer (1410) durch den zweiten Benutzer (1420) gewährt werden;
- Einstellen einer teilweisen Wechselseitigkeit der Rechtsdaten durch das Rechtsverwaltungssystem (1300), wo die Rechtsdaten (32), die dem zweiten Benutzer (1420) vom ersten Benutzer (1410) gewährt werden, ein Untersatz der Rechtsdaten (31) sind, die dem ersten Benutzer (1410) durch den zweiten Benutzer (1420) gewährt werden;
- kein Einstellen von Rechtsdaten, wenn für den zweiten Benutzer (1420) mit Bezug auf den ersten Benutzer (1410) keine Rechtsdaten (32) eingestellt sind.

4. Verfahren nach einem der vorhergehenden Ansprüche, wobei das Einstellen (223) der Rechtsdaten des zweiten Benutzers (1420) mit Bezug auf den ersten Benutzer (1410) ferner auf vorausgelegten Richtlinien (1320) basiert, die mindestens einen der folgenden Aspekte umfassen: einen Kontext (1502), eine Gruppenzugehörigkeit (1322) des zweiten Benutzers, eine Wechselseitigkeitsbedingung (1323) der erhaltenen Rechtsdaten, eine Umgebung des ersten Benutzers.

5. Verfahren nach Anspruch 4, das Folgendes umfasst:
- Erhalten von Sensordaten, die zu einer physischen Umgebung gehören, in der sich der erste Benutzer (1410) befindet, durch das Rechtsverwaltungssystem (1300);
- Einstellen der vorausgelegten Richtlinien (1310, 1320) durch das Rechtsverwaltungssystem (1300) auf Basis der erhaltenen Sensordaten der physischen Umgebung.

6. Rechtsverwaltungssystem (1300), **dadurch gekennzeichnet, dass** das System zu Folgendem ausgelegt ist:
- Empfangen (221) von Daten über einen zweiten Benutzer (1420) auf Basis von Bilddaten des zweiten Benutzers (1420), wenn der zweite Benutzer von einem ersten AR-Aktivierungssystem (1100), das mit einem ersten Benutzer (1410) verknüpft ist, detektiert (211) wird;
- Verwalten von Rechtsdaten, die mindestens den ersten Benutzer (1410) und den zweiten Benutzer (1420) betreffen, wobei die Rechtsdaten Autorisierungen oder Zurückweisungen anzeigen, die für den ersten Benutzer (1410) mit Bezug auf den zweiten Benutzer (1420) eingestellt sind, und umgekehrt;
- Erhalten (222) der Rechtsdaten des ersten Benutzers (1410) mit Bezug auf den zweiten Benutzer (1420) auf Basis der empfangenen Daten über den zweiten Benutzer (1420);
- Einstellen (223) der Rechtsdaten des zweiten Benutzers (1420) mit Bezug auf den ersten Benutzer (1410) auf Basis der erhaltenen Rechtsdaten des ersten Benutzers (1410) mit Bezug auf den zweiten Benutzer (1420);
- Bestimmen eines Kompatibilitätsmaßes zwischen den erhaltenen Rechtsdaten (31) des ersten Benutzers (1410) mit Bezug auf den zweiten Benutzer (1420) und den eingestellten Rechtsdaten (32) des zweiten Benutzers (1420) mit Bezug auf den ersten Benutzer (1410);
- Auslösen einer Warnaktion (34) mit einem virtuellen Schwerpunkt auf der Anwesenheit des zweiten Benutzers (1420) in der Umgebung des ersten Benutzers (1410), wenn das Kompatibilitätsmaß unter einem vorbestimmten Maß der Kompatibilität (33) zwischen dem ersten (1410) und dem zweiten (1420) Benutzer liegt.

7. Rechtseinstellungssystem (1000), das Folgendes umfasst:
- mindestens eine Benutzerdetektionseinheit (1120) des ersten AR-Aktivierungssystems (1100) eines ersten Benutzers (1410), die dazu ausgelegt ist, eine Anwesenheit eines zweiten Benutzers (1420) eines zweiten AR-Aktivierungssystems (1200) in einer physischen Umgebung des ersten Benutzers (1410) routinemäßig zu detektieren (211);
- ein Rechtsverwaltungssystem (1300) nach Anspruch 6.

8. Rechtseinstellungssystem (1000) nach Anspruch 7, wobei das erste AR-Aktivierungssystem (1100) ferner Folgendes umfasst:
- ein Aktionsrechtsmodul, das zum Bestimmen von Aktionsrechten (213) des ersten AR-Aktivierungssystems (1100) durch das erste AR-Aktivierungssystem (1100) ausgelegt ist, wobei die Aktionsrechte zulässige oder erforderliche Aktionen sind.

9. Rechtseinstellungssystem (1000) nach Anspruch 7 oder 8, wobei das Rechtsverwaltungssystem (1300) zum Einstellen (223) der Rechtsdaten des zweiten Benutzers (1420) mit Bezug auf den ersten Benutzer (1410) ferner auf Basis von vorausgelegten Richtlinien (1320) ausgelegt ist, die mindestens einen der folgenden Aspekte umfassen: einen Kontext (1502), eine Gruppenzugehörigkeit (1322) des zweiten Benutzers, eine Wechselseitigkeitsbedingung (1323) der erhaltenen Rechtsdaten, eine Umgebung des ersten Benutzers.

10. Rechtseinstellungssystem (1000) nach Anspruch 9, wobei das Rechtseinstellungssystem (1000) ferner Folgendes umfasst:
- mindestens eine Umgebungssensoreinheit (1101, 1102), die zum Erhalten von Daten ausgelegt ist, die zu einer physischen Umgebung gehören, in der sich der erste Benutzer (1410) der AR-Anwendung befindet;
und wobei das Rechtsverwaltungssystem (1300) zum Einstellen der vorausgelegten Richtlinien (1310) auf Basis der Daten, die von der mindestens einen Umgebungssensoreinheit erhalten werden, ausgelegt ist.

11. Computerprogrammprodukt, das computerausführbare Programmanweisungen zum Durchführen des Verfahrens nach einem der Ansprüche 1 bis 5, wenn sie auf einem Computer ausgeführt werden, umfasst.

## Revendications

1. Procédé d'établissement de droits dans un environnement de réalité altérée (AR), le procédé comprenant les étapes suivantes :
- la réception (221), par un système de gestion des droits (1300), de données représentant un deuxième utilisateur (1420) associé à un deuxième système d'activation AR (1200) lorsque le deuxième utilisateur (1420) est détecté de manière routinière par un premier système d'activation AR (1100) d'un premier utilisateur (1410) dans un environnement physique du premier utilisateur, ledit système de gestion des droits (1300) étant configuré pour gérer des données de droits respectives au moins sur le premier utilisateur (1410) et le deuxième utilisateur (1420), lesdites données de droits indiquant des autorisations ou des refus établis pour le premier utilisateur (1410) par rapport au deuxième utilisateur (1420) et vice versa ;
- sur la base des données reçues représentant le deuxième utilisateur (1420), l'obtention (222), par le système de gestion des droits (1300), des données de droits du premier utilisateur (1410) par rapport au deuxième utilisateur (1420) ;
**caractérisé en ce que** le procédé comprend en outre :
- sur la base des données de droits du premier utilisateur (1410) par rapport au deuxième utilisateur (1420) obtenues, l'établissement (223) des données de droits du deuxième utilisateur (1420) par rapport au premier utilisateur (1410) par le système de gestion des droits (1300) ;
- la détermination, par le système de gestion des droits (1300), d'un niveau de compatibilité entre les données de droits (31) du premier utilisateur (1410) par rapport au deuxième utilisateur (1420) obtenues et les données de droits (32) du deuxième utilisateur (1420) par rapport au premier utilisateur (1410) établies ;
- l'engagement, par le système de gestion des droits (1300), d'une action d'avertissement (34) représentant une accentuation virtuelle de la présence du deuxième utilisateur (1420) dans l'environnement du premier utilisateur (1410) si le niveau de compatibilité est en dessous d'un niveau prédéterminé de la compatibilité (33) entre le premier (1410) et le deuxième (1420) utilisateur.

2. Procédé selon la revendication 1, comprenant en outre :
- sur la base des données de droits du deuxième utilisateur (1420) par rapport au premier utilisateur (1410) établies, la détermination de droits d'action (213) du premier système d'activation AR (1100) par le premier système d'activation AR (1100), lesdits droits d'action étant des actions autorisées ou requises.

3. Procédé selon la revendication 1 ou 2, dans lequel l'établissement (223) des données de droits du deuxième utilisateur (1420) par rapport au premier utilisateur (1410) comprend au moins un de ce qui suit :
- l'établissement, par le système de gestion des droits (1300), d'une réciprocité totale des données de droits où les données de droits (32) accordées au deuxième utilisateur (1420) par le premier utilisateur (1410) sont les mêmes données de droits (31) accordées au premier utilisateur (1410) par le deuxième utilisateur (1420) ;
- l'établissement, par le système de gestion des droits (1300), d'une réciprocité partielle des données de droits où les données de droits (32) accordées au deuxième utilisateur (1420) par le premier utilisateur (1410) sont un sous-ensemble des données de droits (31) accordées au premier utilisateur (1410) par le deuxième utilisateur (1420) ;
- pas d'établissement de données de droits si aucune donnée de droits (32) n'est établie pour le deuxième utilisateur (1420) par rapport au premier utilisateur (1410).

4. Procédé selon l'une quelconque des revendications précédentes, dans lequel l'établissement (223) des données de droits du deuxième utilisateur (1420) par rapport au premier utilisateur (1410) est en outre basé sur des politiques préconfigurées (1320) comprenant au moins un des aspects suivants : un contexte (1502), une affiliation de groupe du deuxième utilisateur (1322), une condition de réciprocité (1323) des données de droits obtenues, un environnement du premier utilisateur.

5. Procédé selon la revendication 4, comprenant :
- l'obtention, par le système de gestion des droits (1300), de données de capteur se rapportant à un environnement physique où le premier utilisateur (1410) est situé ;
- sur la base des données de capteur de l'environnement physique obtenues, l'établissement, par le système de gestion des droits (1300), des politiques préconfigurées (1310, 1320).

6. Système de gestion des droits (1300) **caractérisé en ce que** le système est configuré pour :
- recevoir (221) des données représentant un deuxième utilisateur (1420) sur la base de données d'image du deuxième utilisateur (1420) lorsque le deuxième utilisateur est détecté (211) par un premier système d'activation AR (1100) associé à un premier utilisateur (1410) ;
- gérer des données de droits respectives au moins sur le premier utilisateur (1410) et le deuxième utilisateur (1420), lesdites données de droits indiquant des autorisations ou des refus établis pour le premier utilisateur (1410) par rapport au deuxième utilisateur (1420) et vice versa ;
- obtenir (222) les données de droits du premier utilisateur (1410) par rapport au deuxième utilisateur (1420) sur la base des données reçues représentant le deuxième utilisateur (1420) ;
- établir (223) les données de droits du deuxième utilisateur (1420) par rapport au premier utilisateur (1410) sur la base des données de droits du premier utilisateur (1410) par rapport au deuxième utilisateur (1420) obtenues ;
- déterminer un niveau de compatibilité entre les données de droits (31) du premier utilisateur (1410) par rapport au deuxième utilisateur (1420) obtenues et les données de droits (32) du deuxième utilisateur (1420) par rapport au premier utilisateur (1410) établies ;
- engager une action d'avertissement (34) représentant une accentuation virtuelle de la présence du deuxième utilisateur (1420) dans l'environnement du premier utilisateur (1410) si le niveau de compatibilité est en dessous d'un niveau prédéterminé de la compatibilité (33) entre le premier (1410) et le deuxième (1420) utilisateur.

7. Système d'établissement de droits (1000) comprenant :
- au moins une unité de détection d'utilisateur (1120) du premier système d'activation AR (1100) d'un premier utilisateur (1410) configurée pour détecter de manière routinière (211) une présence d'un deuxième utilisateur (1420) d'un deuxième système d'activation AR (1200) dans un environnement physique du premier utilisateur (1410) ;
- un système de gestion des droits (1300) selon la revendication 6.

8. Système d'établissement de droits (1000) selon la revendication 7, le premier système d'activation AR (1100) comprenant en outre :
- un module de droits d'action configuré pour déterminer des droits d'action (213) du premier système d'activation AR (1100) par le premier système d'activation AR (1100), lesdits droits d'action étant des actions autorisées ou requises.

9. Système d'établissement de droits (1000) selon la revendication 7 ou 8, dans lequel le système de gestion des droits (1300) est configuré pour établir (223) les données de droits du deuxième utilisateur (1420) par rapport au premier utilisateur (1410) en se basant en outre sur des politiques préconfigurées (1320) comprenant au moins un des aspects suivants : un contexte (1502), une affiliation de groupe du deuxième utilisateur (1322), une condition de réciprocité (1323) des données de droits obtenues, un environnement du premier utilisateur.

10. Système d'établissement de droits (1000) selon la revendication 9, dans lequel le système d'établissement de droits (1000) comprend en outre :
- au moins une unité de capteur d'environnement (1101, 1102) configurée pour obtenir des données se rapportant à un environnement physique où le premier utilisateur (1410) de l'application AR est situé ;
et dans lequel le système de gestion des droits (1300) est configuré pour établir les politiques préconfigurées (1310) sur la base des données obtenues par l'au moins une unité de capteur d'environnement.

11. Produit de programme informatique comprenant des instructions de programme exécutables par ordinateur pour réaliser, lorsqu'elles sont exécutées sur un ordinateur, les procédés de l'une quelconque des revendications 1 à 5.
